# FASCICULE DE BREVET EUROPEEN

(11) **EP 1 217 392 B1**
(45) Date de publication et mention de la délivrance du brevet: **26.05.2004**
(21) Numéro de dépôt: 01204509.2
(22) Date de dépôt: 20.11.2001
(51) Int. Cl.: G01V 8/12

(54) **Procédé de sélection du fonctionnement d'un détecteur optique et détecteur optique multimode**
Verfahren zur Auswahl der Funktionsweise eines optischen Detektors oder eines optischen Multimode-Detektors
Method of selecting the mode of operation of an optical detector or an optical multimode detector

(30) Priorité: 06.12.2000 FR 0015852
(43) Date de publication de la demande: 26.06.2002
(73) Titulaire: Schneider Electric Industries SAS, 92500 Rueil-Malmaison (FR)
(72) Inventeur: Couillaud, Frédéric, Ing., 16000 Angoulême (FR); Guillot, Alain, Ing., 16730 Fleac (FR); Laurent, Jean-Pierre, Ing., 16110 Marillac le Franc (FR)

(56) Documents cités:
- EP-A- 0 923 140
- FR-A- 2 792 732

## Description

La présente invention concerne un procédé de sélection du fonctionnement d'un détecteur optique comprenant un système d'émission et un système de réception, ce dernier étant doté d'au moins un composant photorécepteur apte à délivrer un signal de réception significatif de la présence ou de la distance d'un objet sur le trajet d'un faisceau d'émission.

De tels détecteurs optiques sont bien connus. Quand ils fonctionnent par détection de l'interruption d'un flux lumineux d'émission par l'objet à détecter, ils font partie d'un première famille de détecteurs : barrage, reflex non polarisé ou reflex polarisé. Il importe de noter que, par la suite, le terme "reflex" qualifiera aussi bien un détecteur reflex non polarisé qu'un détecteur reflex polarisé. Dans le cas d'un fonctionnement en barrage, le détecteur ne comprend pas de système d'émission et une source lumineuse externe doit être alignée avec l'axe du composant photorécepteur. Dans le cas d'un fonctionnement reflex, le détecteur comprend un système d'émission dont l'axe est voisin de celui du composant photorécepteur, tandis qu'un réflecteur doit être aligné avec l'axe d'émission pour renvoyer un faisceau réfléchi vers le composant.

Quand les détecteurs optiques utilisent la réflexion diffuse sur l'objet à détecter du faisceau émis par leur système d'émission, ils font partie d'une deuxième famille de cellules exploitant soit une mesure d'énergie dans une sous-famille dite de "proximité", soit une mesure de déplacement de la tâche lumineuse reçue par le composant photorécepteur, par effet de triangulation, dans une sous-famille dite de "proximité avec effacement d'arrière-plan".

Le document EP 923 140 décrit une cellule optique dotée d'un composant photorécepteur unique configurable pour pouvoir fonctionner en mode reflex ou en mode proximité, en réponse à une sélection volontaire. Il s'avère dans certains cas souhaitable d'obtenir une telle configuration de manière semi-automatique ou automatique.

Le document FR 2 792 732 divulgue un détecteur optique comprenant deux émetteurs aptes à émettre des faisceaux de longueurs d'onde différentes, un filtre polarisant associé à l'un des émetteurs, et un récepteur à deux sorties. Après émission, des moyens de sélection analysent les signaux électriques de réception, pour inhiber l'émetteur non approprié, activer l'autre émetteur et adapter le récepteur à un fonctionnement en mode reflex ou en mode proximité.

L'invention a pour but de permettre à un détecteur optique de fonctionner dans au moins deux modes de fonctionnement pris parmi les modes barrage, reflex, proximité ou proximité avec effacement d'arrière-plan, en se plaçant de lui-même dans le mode approprié en fonction de l'environnement qu'il constate.

Selon l'invention, le détecteur est configurable pour être activé, soit dans un premier mode de fonctionnement à interruption de faisceau du type barrage ou reflex, soit dans un deuxième mode de fonctionnement à réflexion diffuse, de type proximité ou proximité avec effacement d'arrière-plan ; le détecteur est initialement activé dans le premier mode de fonctionnement (par son système d'émission et par son système de réception), et le système de réception effectue une reconnaissance du premier mode, cette reconnaissance consistant à évaluer un signal de réception pour générer un signal de reconnaissance significatif d'une réception correspondant au premier mode de fonctionnement ou ne correspondant pas à ce premier mode puis en fonction du signal de reconnaissance et de manière subordonnée à une action de validation le système de réception, et éventuellement le système d'émission, du détecteur est confirmé dans le premier mode de fonctionnement ou commuté dans le deuxième mode de fonctionnement selon qu'il y a ou non reconnaissance du premier mode. La confirmation dans le premier mode ou commutation dans le deuxième mode est subordonnée à une validation qui peut être automatique ou qui, de préférence, résulte d'une manoeuvre d'un opérateur. Le détecteur est ainsi apte à autodéterminer son mode de fonctionnement de manière séquentielle.

Quand le détecteur a été configuré dans le deuxième mode de fonctionnement, on peut souhaiter qu'il se place automatiquement dans un sous-mode approprié. A cet effet, le système de réception mesure la distance d'arrière-plan, puis, en fonction de la distance mesurée, se met dans l'état "proximité" (avec détermination de l'énergie du faisceau de réception par rapport à un seuil), ou dans l'état "proximité avec effacement d'arrière-plan" (avec traitement de position du faisceau de réception).

L'invention concerne aussi un détecteur optique multimode comprenant des moyens matériels et logiciels de détection et de configuration aptes à engendrer la configuration décrite.

La description va être faite ci-après d'un mode de réalisation non (imitatif de l'invention, en regard des dessins annexés.
La figure 1 représente schématiquement un détecteur optique multimode et ses diverses possibilités d'utilisation.
La figure 2 représente schématiquement un composant utilisable dans le détecteur de la figure 1 dans deux modes de fonctionnement distincts.
La figure 3 montre schématiquement un diagramme illustrant le procédé selon l'invention.
La figure 4 est un organigramme illustrant la séquence du procédé de mise en oeuvre du détecteur selon l'invention dans une forme d'exécution quadrimode.

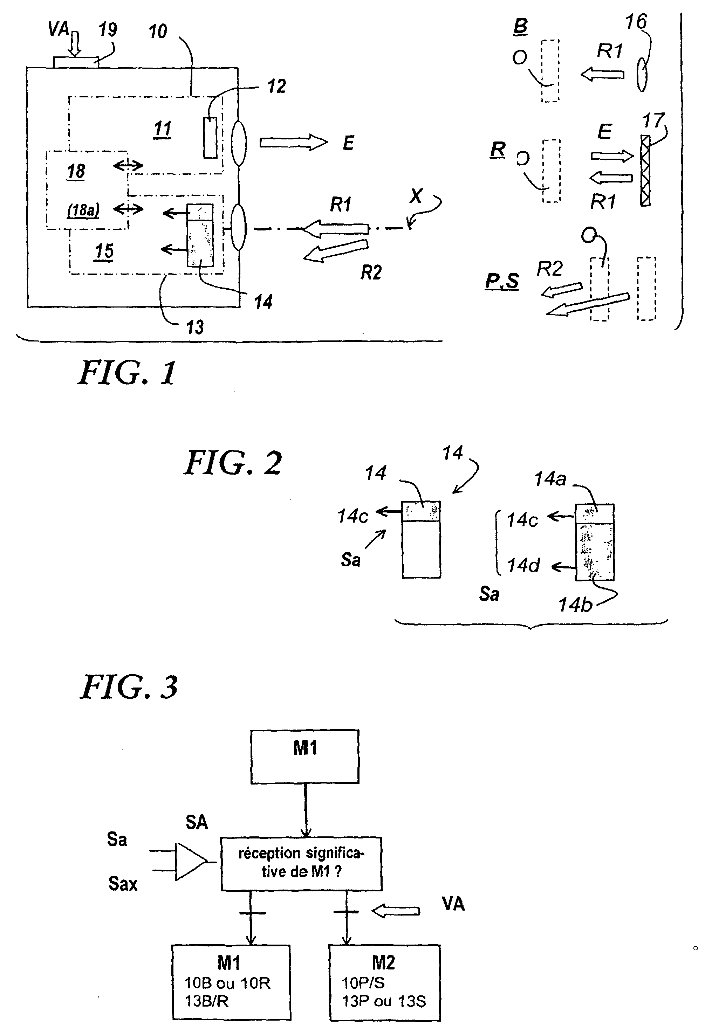

Le détecteur optique multimode de la figure 1 comprend un système d'émission 10 doté d'un circuit électronique 11, de moyens logiciels associés et d'un organe photoémetteur 12 afin d'émettre un faisceau d'émission E. Il comprend aussi un système de réception 13 doté, pour exploiter un faisceau de réception R1 ou R2, d'un organe photorécepteur 14 d'axe X, d'un circuit électronique de traitement 15 et de moyens logiciels associés.

Deux modes de fonctionnement mettent en oeuvre une opération préalable d'alignement : un mode barrage B, dans lequel le faisceau R1 provient d'une source lumineuse externe 16, à la condition que cette source soit convenablement alignée, le faisceau étant occulté quand un objet O s'intercale sur l'axe de réception X. Et un mode reflex R, dans lequel le faisceau R1 provient de la source lumineuse interne constituée par l'organe 12, après réflexion sur un réflecteur 17, à la condition que ce réflecteur soit convenablement aligné. Le faisceau est là encore occulté quand un objet s'intercale sur l'axe X et le circuit 15 commute une sortie du détecteur en fonction de cette occultation.

D'autres modes de fonctionnement ne nécessitent pas d'alignement sur un réflecteur ou un émetteur et exploitent la réflexion diffuse de la lumière sur l'objet, dans un mode "proximité" P ou un mode "proximité avec effacement d'arrière plan" S. L'objet O renvoie un faisceau R2 qui produit sur le composant une tâche lumineuse. Dans le mode proximité P, le circuit électronique 15 traite la variation d'intensité de la tâche pour détecter l'objet. Dans le mode proximité avec effacement d'arrière plan S, il y a exploitation en triangulation de l'inclinaison du faisceau réfléchi et c'est la variation de position de la tâche sur l'organe photorécepteur 14 qui est exploitée.

Le détecteur comprend des moyens matériels et logiciels de détection et de configuration 18 qui sont associés aux systèmes d'émission 10 et de réception 13.

D'une part, les moyens 18 configurent le système d'émission 10 en fonction du mode de fonctionnement souhaité : pas d'émission en mode barrage B (état 10B) puisqu'une source externe est alors active, émission dans une première longueur d'onde en mode reflex R (état 10R), émission dans la première longueur d'onde ou dans une deuxième longueur d'onde en mode proximité P ou proximité avec effacement d'arrière plan S (état 10P/S). D'autre part, les moyens 18 configurent le système de réception 13 en fonction du mode de fonctionnement souhaité : état 13B/R en mode barrage B et en mode reflex R, état 13P en mode proximité P et état 13S en mode proximité avec effacement d'arrière plan S.

Pour mieux comprendre la configuration du système de réception 13, un exemple de composant photorécepteur 14 approprié à la mise en oeuvre de l'invention a été représenté sur la figure 2. Ce composant présente deux zones, l'une 14a active dans les modes de fonctionnement barrage B et reflex R et l'autre 14b active dans les modes de fonctionnement proximité P ou proximité avec effacement d'arrière plan S. Dans les modes P et S, la zone 14a peut aussi rester active. Le composant présente ainsi plusieurs zones ou voies de sortie activées par le circuit 15 en fonction du mode choisi et exploitées par ce circuit. On peut aussi utiliser à titre de composant 14 deux composants photorécepteurs voisins l'un de l'autre, par exemple en juxtaposant deux composants appropriés, par exemple une photodiode pour la zone 14a, active en mode B ou R, et un composant PSD ("position sensing device") pour la zone 14b, active en mode P ou S. Il convient de rappeler qu'un composant PSD fonctionne avec amplification de ses grandeurs de sortie et comparaison des grandeurs amplifiées.

Les moyens matériels et logiciels de détection et de configuration 18 comprennent un microcontrôleur ou autre organe logique apte à traiter et évaluer le signal de réception Sa pour générer par comparaison à un ou plusieurs seuils Sax un signal de reconnaissance, à savoir un signal SA significatif d'une réception correspondant à un premier mode de fonctionnement, ou ne correspondant pas à ce premier mode. En fonction de l'état du signal de reconnaissance, le microcontrôleur commute le système de réception 13 et éventuellement le système d'émission 10 vers un état correspondant au premier mode ou au second mode de fonctionnement.

La figure 3 explicite le procédé. Les systèmes d'émission 10 et de réception 13 du détecteur sont initialement mis dans les états 10B ou 10R et 13B/R correspondant au premier mode de fonctionnement M1 (mode B ou R). Les moyens de détection et configuration 18 détectent si le niveau du signal reçu Sa est supérieur à un seuil (réception significative du premier mode) ou inférieur à ce seuil (réception significative du second mode), puis une action de validation VA, soit automatique et utilisant un moyen de temporisation 18a, soit de préférence exercée par l'opérateur au moyen du poussoir 19, est effectuée. Cette action confirme la configuration du détecteur dans le premier mode M1 si la réception est significative ou commute le système d'émission 10 du détecteur dans l'état 10P/S et le système de réception 13 dans un état 13P ou 13S correspondant au deuxième mode M2 (qui peut être le mode P ou le mode S) si la réception n'est pas significative. Le choix effectué entre l'état 13P et l'état 13S est décrit plus loin.

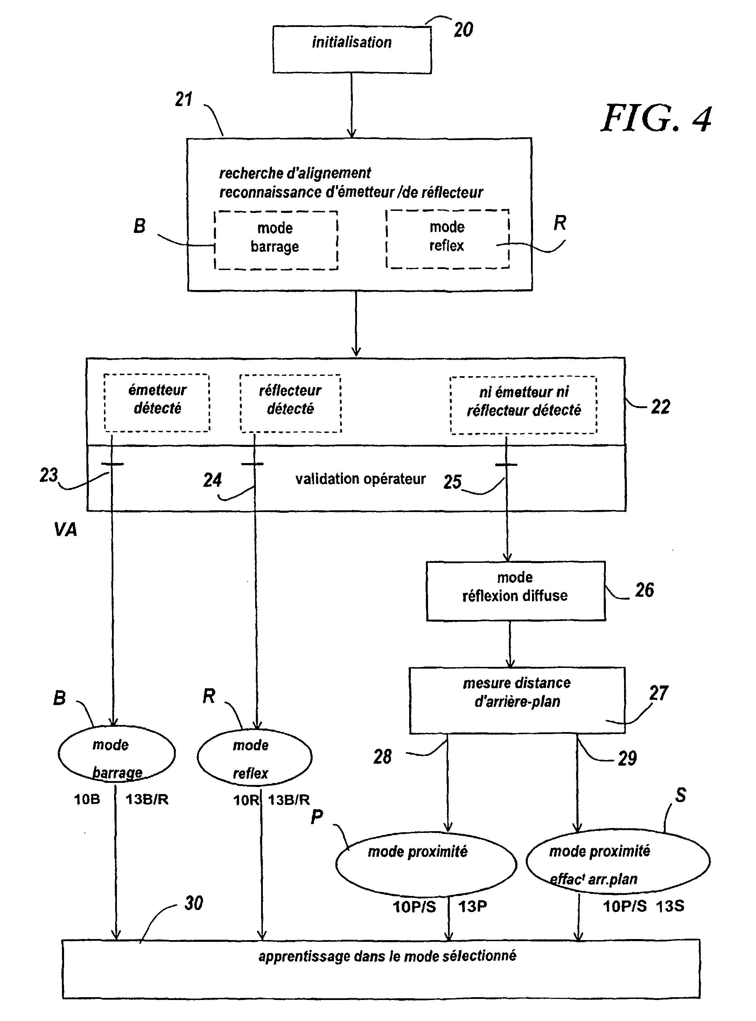

La figure 4 illustre un exemple de séquence de configuration utilisée pour sélectionner le mode de fonctionnement souhaité d'un détecteur optique apte à fonctionner dans les quatre modes B,R,P,S. Il va de soi que la séquence est plus simple lorsqu'on désire rendre le détecteur optique apte à fonctionner seulement dans deux ou trois modes : par exemple seulement en reflex R et proximité P, ou reflex R et proximité avec effacement d'arrière plan S, ou encore en reflex R / proximité P / proximité avec effacement d'arrière plan S.

Lors d'une initialisation 20, produite à l'installation du détecteur ou par un reset de l'utilisateur, le détecteur entre dans une étape de recherche d'alignement 21. Dans cette étape, le système d'émission 10 du détecteur alterne des cycles de fonctionnement en mode barrage B (état 10B : absence d'émission) et en mode reflex R (état 10R : émission de lumière par l'organe 12) ; pendant ce temps, l'utilisateur aligne le détecteur avec un émetteur externe 16 ou un réflecteur 17 s'il souhaite mettre en oeuvre le mode B ou R ou n'aligne rien s'il souhaite mettre en oeuvre le mode P ou S. L'opération d'alignement fait intervenir une ou plusieurs diodes électroluminescentes visibles sur le boîtier et reliées au circuit 15. Si le système de réception 13 détermine au terme de quelques cycles la présence de l'émetteur 16 en réponse à ses absences d'émission ou la présence du réflecteur 17 en réponse à ses émissions, il présélectionne le détecteur dans le mode barrage B ou dans le mode reflex R.

Lorsque l'utilisateur exerce dans une étape 22 une action volontaire de confirmation VA, par exemple au moyen d'un poussoir de validation 19, les systèmes d'émission et de réception du détecteur sont verrouillés en 23 dans le mode barrage B ou en 24 dans le mode reflex R selon le résultat de l'étape 21. Cette action est exercée localement ou à distance. Si le système de réception 13 n'a pas vu d'émetteur ni de réflecteur, les systèmes d'émission et de réception du détecteur passent en 25, en réponse à l'action de validation VA, à une étape 26 de fonctionnement en réflexion diffuse. Les transitions 23, 24 et 25 se traduisent par une configuration, appropriée au mode sélectionné, du système d'émission 10, par exemple avec commutation de la longueur d'onde d'émission, et du système de réception 13, par activation de zones photoréceptrices ou voies de sortie du ou des composants 14.

Dans la phase 26 de réflexion diffuse a lieu, en réponse à l'émission d'un faisceau de longueur d'onde appropriée, une mesure 27 de la distance d'arrière plan par le circuit 15. Selon le résultat de la mesure, le système de réception 13 commute en 28 le détecteur en mode proximité P (état 13P : traitement de l'énergie reçue relativement à un seuil donné) ou en 29 en mode proximité avec effacement d'arrière plan S (état 13S : traitement de la position de la tâche lumineuse sur le composant photorécepteur).

Typiquement, les moyens 18 comparent le signal reçu Sa avec un seuil haut et un seuil bas. De la sorte, si la distance d'arrière plan est située dans un intervalle prédéterminé (par exemple entre 30 cm et 130cm), le système de réception 13 est configuré dans l'état 13S "proximité avec effacement d'arrière plan " et, si la distance d'arrière plan est située hors de cet intervalle, le système de réception est configuré dans l'état 13P "proximité ". Selon le(s) composant(s) photorécepteur(s) utilisés dans le système de réception 13, la configuration affecte l'aire réceptrice 14a,14b ou les voies de sortie 14c,14d de ce(s) composant(s). Quand la configuration résultant du choix 28,29 est réalisée, le détecteur entre dans une étape d'apprentissage 30 qui, selon le mode de fonctionnement en cours, apprend l'émetteur externe, le réflecteur ou l'arrière plan.

Il va de soi que des variantes peuvent être apportées aux modes de réalisation décrits.

## Revendications

1. Procédé de configuration du mode de fonctionnement d'un détecteur optique, le détecteur comprenant un système d'émission et un système de réception, le détecteur étant configurable pour être activé, soit dans un premier mode de fonctionnement, soit dans un deuxième mode de fonctionnement,
- le premier mode de fonctionnement (M1) est celui d'un détecteur de type dit barrage ou reflex (B,R), et le deuxième mode de fonctionnement (M2) est celui d'un détecteur de type proximité ou proximité avec effacement d'arrière-plan (P,S),
**caractérisé par le fait que** :
- le détecteur est initialement activé dans le premier mode de fonctionnement (M1), puis le système de réception (13) du détecteur effectue une reconnaissance (21) du premier mode, cette reconnaissance consistant à évaluer un signal de réception (Sa) pour générer un signal de reconnaissance (SA) significatif d'une réception correspondant au premier mode de fonctionnement (M1), ou ne correspondant pas à ce premier mode, puis en fonction du signal de reconnaissance et en subordination à une action de validation volontaire (VA) le système de réception du détecteur est confirmé dans un état (13B/R) propre au premier mode de fonctionnement (M1) ou commuté dans un état (13P, 13S) propre au deuxième mode de fonctionnement (M2).

2. Procédé selon la revendication 1, **caractérisé par le fait qu'**en fonction du signal de reconnaissance (21) et de l'action de validation (VA) le système d'émission (10) du détecteur est confirmé dans un état (10B, 10R) propre au premier mode de fonctionnement (M1) ou commuté dans un état (10P/S) propre au deuxième mode de fonctionnement (M2).

3. Procédé selon la revendication 1, **caractérisé par le fait que** la reconnaissance (21) effectuée sous le premier mode de fonctionnement (M1) inclut une reconnaissance d'émetteur ou de réflecteur par mise en alignement avec un émetteur externe ou un réflecteur, l'action de validation (VA) verrouillant le système d'émission (10) en mode barrage avec absence d'émission ou en mode reflex avec émission.

4. Procédé selon la revendication 3, **caractérisé par le fait que**, pendant la reconnaissance (21) effectuée sous le premier mode de fonctionnement (M1), le système d'émission (10) oscille de l'état barrage (10B) à l'état reflex (10R) par activations et désactivations alternées.

5. Procédé de configuration selon la revendication 1, **caractérisé par le fait que** le deuxième mode de fonctionnement (M2) comporte une étape (27) de mesure de la distance d'arrière-plan, puis, en fonction de la distance mesurée, le système de réception (13) est mis dans l'état proximité (13P), avec détermination de l'énergie du faisceau de réception par rapport à un seuil, ou dans l'état proximité avec effacement d'arrière-plan (13S), avec traitement de position du faisceau de réception.

6. Détecteur optique multimode comprenant un système d'émission (10) et un système de réception (13), le système de réception étant doté d'au moins un composant photorécepteur (14) et étant apte à délivrer un signal de réception (Sa) significatif de la présence ou de la distance d'un objet sur le trajet d'un faisceau d'émission, le détecteur étant capable d'opérer dans un premier mode de fonctionnement (M1) ou un deuxième mode de fonctionnement (M2),
- le premier mode de fonctionnement (M1) est celui d'un détecteur de type barrage ou reflex (B,R), et le deuxième mode de fonctionnement (M2) est celui d'un détecteur de type proximité ou proximité avec effacement d'arrière-plan (P,S), le système d'émission (10) et le système de réception (13) étant agencés pour opérer dans l'un ou l'autre mode,
**caractérisé par le fait que** :
- le détecteur comprend des moyens matériels et logiciels de détection et de configuration (18) aptes à traiter le signal de réception (Sa), à délivrer en conséquence un signal de reconnaissance (SA) significatif de la reconnaissance d'un émetteur externe ou d'un réflecteur, et, selon l'état du signal de reconnaissance, à confirmer ou commuter le système de réception (13) dans un premier état (13B/R) propre au mode de fonctionnement barrage ou reflex (B,R) ou dans un deuxième état (13P,13S) propre au mode de fonctionnement proximité ou proximité avec effacement d'arrière-plan (P,S),
- les moyens de détection et de configuration (18) comprennent un moyen de validation (19) apte à confirmer le premier état ou commuter le deuxième état de manière volontaire.

7. Détecteur selon la revendication 6, **caractérisé par le fait que** les moyens matériels et logiciels de détection et de configuration (18) commutent, selon l'état du signal de reconnaissance (SA), les zones actives ou voies de sortie du ou des composants photorécepteurs (14).

8. Détecteur selon la revendication 6, **caractérisé par le fait que** les moyens matériels et logiciels de détection et de configuration (18) confirment ou respectivement commutent, selon l'état du signal de reconnaissance (SA) et la mise en oeuvre du moyen de validation (19), le système d'émission (10) dans le premier mode de fonctionnement (B,R) ou respectivement le deuxième mode de fonctionnement (P,S).

9. Détecteur selon la revendication 8, **caractérisé par le fait que**, pour confirmer le système d'émission (10) dans le premier mode de fonctionnement (B,R), le moyen de validation (19) verrouille le système d'émission (10) avec absence d'émission en mode barrage ou avec émission en mode reflex.

10. Détecteur selon la revendication 9, **caractérisé par le fait que** le système d'émission (10) oscille de manière alternée du mode barrage au mode reflex par activations et désactivations alternées.

## Patentansprüche

1. Konfigurationsverfahren für die Betriebsart eines Lichtasters, bestehend aus einem Sendesystem und einem Empfangssystem, konfigurierbar für einen Betrieb in einem ersten Funktionsmodus oder einem zweiten Funktionsmodus.
Dahingehend **gekennzeichnet,** dass:
- die erste Betriebsart (M1) der Sperrtaster- oder Reflexionslichttastermodus (B, R) ist und die zweite Betriebsart (M2) der Modus Näherungstaster oder Näherungstaster mit Hintergrundausblendung ist (P, S),
- der Taster ursprünglich in der ersten Betriebsart (M1) aktiviert ist, dann das Empfangssystem (13) des Tasters eine Erkennung (21) des ersten Modus vornimmt und dass daraufhin, abhängig zu dieser Erkennung, das Empfangssystem des Tasters in einem Zustand (13B/R), der der ersten Betriebsart (M1) eigen ist, bestätigt wird oder in einen Zustand (13P, 13S) umschaltet, der der zweiten Betriebsart (M2) entspricht.

2. Verfahren nach Patentanspruch 2, dahingehend **gekennzeichnet**, dass der Taster in der ersten Betriebsart (M1) bestätigt oder in die zweite Betriebsart (M2) geschaltet wird, als Antwort auf einen Freigabevorgang (VA).

3. Verfahren nach Patentanspruch 2, dahingehend **gekennzeichnet,** dass abhängig von der Erkennung (21), das Sendesystem (10) des Tasters einen Zustand (10B, 10R) bestätigt, der der ersten Betriebsart (M1) eigen ist oder in einen Zustand (10P, 10S) umschaltet, der der zweiten Betriebsart (M2) entspricht.

4. Verfahren nach Patentanspruch 1, dahingehend **gekennzeichnet**, dass während der Erkennung (21) des Emitters oder des Reflektors, die in der ersten Betriebsart (M1) angesprochen werden, das Sendesystem (10) zwischen dem Sperrzustand (10B) und dem Reflexionslichtzustand (10R) durch alternative Aktivierung und Deaktivierung oszilliert.

5. Konfigurationsverfahren nach Patentanspruch 1, dahingehend **gekennzeichnet,** dass die zweite Betriebsart (M2) eine Phase (27) zur Messung der Hintergrunddistanz beinhaltet, und, abhängig zur gemessenen Distanz, das Empfangssystem (13) in den Näherungstasterzustand (13P), mit Bestimmung der Empfangsstrahlenergie im Verhältnis zu einem Schaltpunkt, oder in den Zustand Näherungstaster mit Hintergrundausblendung (13S), mit Verarbeitung der Empfangsstrahlposition, gebracht wird.

6. Multimode-Lichttaster bestehend aus einem Sendesystem (10) und einem Empfangssystem (13), das Empfangssystem besitzt mindestens ein photorezeptorisches Element (14), das fähig ist, ein signifikantes Empfangssignal über die Präsenz oder die Entfernung eines Objektes auf einem emittierenden Lichtweg zu liefern, der Taster ist dabei in der Lage, seine Funktion in der ersten Betriebsart (M1) oder in der zweiten Betriebsart (M2) auszuüben, dahingehend **gekennzeichnet,** dass:
- die erste Betriebsart (M1) vom Typ Sperrtaster oder Reflexionslichtaster (B, R) ist und die zweite Betriebsart (M2) vom Typ Näherungstaster oder Näherungstaster mit Hintergrundausblendung ist (P, S),
wobei das Sendesystem (10) und das Empfangssystem (13) für eine Funktionsweise in der einen oder der anderen Betriebsart ausgelegt sind,
- der Taster materielle Mittel und Softwaremittel für die Erfassung und die Konfiguration (18) umfasst, die das Empfangssignal (Sa) verarbeiten und daraus folgernd ein signifikantes Empfangssignal (18) liefern können für die Erkennung eines externen Emitters oder eines Reflektors und, abhängig. vom Zustand des Erkennungssignals, das Empfangssystem (13) in einem Zustand (13B/R), der der Betriebsart Sperrtaster oder Reflexionslichttaster (B,R) eigen ist, oder in einen Zustand (13P, 13S), der der Betriebsart Näherungstaster oder Näherungstaster mit Hintergrundausblendung (P, S) entspricht, bestätigen oder umschalten können,
- die Erfassungs- und Konfigurationsmittel (18) Mittel zur Freigabe der erkannten Betriebsart umfasst.

7. Taster nach Patentanspruch 6, dahingehend **gekennzeichnet,** dass die materiellen Mittel und die Softwaremittel für die Erfassung und Konfiguration (18) die aktiven Zonen oder die Ausgangskanäle des oder der photorezeptorischen Elemente (14) abhängig vom Zustand des Erkennungssignals (SA) schalten.

8. Taster nach Patentanspruch 6, dahingehend **gekennzeichnet,** dass die materiellen Mittel und die Softwaremittel für die Erfassung und Konfiguration (18) die Wellenlänge des Empfangssystems (10) abhängig vom Zustand des Erkennungssignals (SA) in die voreingestellte Betriebsart (B, R) oder (P, S) schalten.

9. Taster nach Patentanspruch 6, dahingehend **gekennzeichnet,** dass die Freigabemittel (19) von einem Bediener ausgelöst werden.

10. Taster nach Patentanspruch 6, dahingehend **gekennzeichnet,** dass das Empfangssystem (10) durch alternative Aktivierung und Deaktivierung vom Sperrtastermodus auf den Reflexlichtmodus oszilliert.

## Claims

1. A method for configuring the operating mode of an optical detector, the detector comprising an emitting system and a receiving system, the detector being configurable in order to be activated, either in a first operating mode or in a second operating mode,
**characterized by** the fact that:
- the first operating mode (M1) is of the so-called barrier or reflex (B, R) type and the second operating mode (M2) is of the proximity or background suppression proximity (P, S) type
- the detector is initially activated in the first operating mode (M1), and the receiving system (13) of the detector performs a recognition (21) of the first mode, and then depending on the recognition, the receiving system of the detector is confirmed in a state (13B/R) specific to the first operating mode (M1) or switched over into a state (13P, 13S) specific to the second operating mode (M2).

2. The method according to claim 1, **characterized by** the fact that the detector is confirmed in the first operating mode (M1) or switched over into the second operating mode (M2) in response to a validation operation (VA).

3. The method according to claim 1, **characterized by** the fact that, depending on the recognition (21), the emitting system (10) of the detector is confirmed in a state (10B, 10R) specific to the first operating mode (M1) or switched over into a state (10P/S) specific to the second operating mode (M2).

4. The method according to claim 1, **characterized by** the fact that, during the recognition (21) of the emitter or reflector which is involved in the first operating mode (M1), the emitting system (10) oscillates from the barrier state (10B) to the reflex state (10R) by alternated activation and desactivation.

5. The configuration method according to claim 1, **characterized by** the fact that the second operating mode (M2) includes a step (27) for measuring the background distance, and then depending on the measured distance, the receiving system (13) is put into the proximity state (13P), with determination of the energy of the received beam, with respect to a threshold, or into the background suppression proximity state (13S), with processing of the position of the receiving beam.

6. A multimode optical detector comprising an emitting system (10) and a receiving system (13), the receiving system being provided with at least one photoreceptor component (14) and being able to deliver a received signal significative of the presence or of the distance of an object on the path of an emitted beam, the detector being capable of operating in a first operating mode (M1) or a second operating mode (M2), **characterized by** the fact that:
- the first operating mode (M1) is of the barrier or reflex (B,R) type, and the second operating mode (M2) is of the proximity or background suppression proximity (P,S) type, the emitting system (10) and receiving system (13) being laid out in order to operate in either mode,
- the detector comprises detection and configuration hardware and software means (18) able to process the received signal (Sa), in order to consequently deliver a receipt signal (SA) significative of the recognition of an external emitter or of a reflector and, according to the state of the recognition signal, to confirm or switch the receiving system (13) into a state (13B/R) specific to the barrier or reflex (B,R) operating mode or into a state (13P,13S) specific to the proximity or background suppression proximity (P,S) operating mode,
- the detection and configuration means (18) comprise a validation means (18a,19) for the recognized operating mode.

7. The detector according to claim 6, **characterized by** the fact that the detection and configuration hardware and software means (18) switch, according to the state of the recognition signal (SA), the activated areas or output channels of the photoreceptor component(s) (14).

8. The detector according to claim 6, **characterized by** the fact that the detection and configuration hardware and software means (18) switch, according to the state of the recognition signal (SA), the wavelength of the emitting system (10) in the preselected operating mode (B,R) or (P,S).

9. The detector according to claim 6, **characterized by** the fact that validation means (19) is implemented by an operator.

10. The detector according to claim 6, **characterized by** the fact that the emitting system (10) alternately oscillates from the barrier mode to the reflex mode by alternate activation and desactivation.
